Europäisches Patentamt

European Patent Office

Office européen des brevets

(11) Veröffentlichungsnummer: **0 087 721**

**A1**

(12) # EUROPÄISCHE PATENTANMELDUNG

(21) Anmeldenummer: **83101667.0**

(22) Anmeldetag: **22.02.83**

(51) Int. Cl.³: **F 16 B 23/00**

(30) Priorität: **24.02.82 DE 3206494**

(43) Veröffentlichungstag der Anmeldung:
**07.09.83 Patentblatt 83/36**

(84) Benannte Vertragsstaaten:
**IT**

(71) Anmelder: **Rappold, Manfred, Dr.
Am Ziegelrain 6
D-7117 Bretzfeld(DE)**

(72) Erfinder: **Steck, Otto
Erbweg 11
D-7119 Forchtenberg(DE)**

(72) Erfinder: **Weidner, Karl
Worgberg 14
D-7118 Ingelfingen(DE)**

(74) Vertreter: **Patentanwälte Ruff und Beier
Neckarstrasse 50
D-7000 Stuttgart 1(DE)**

(54) **Kopf- und Schlüsselausbildung für eine Schraube.**

(57) Zur Drehmomentübertragung zwischen einem Werkzeug und einer Schraube wird eine Form vorgeschlagen, deren Kraftanlageflächen nach außen gewölbte Kreisbögen (11) mit gleichem Radius sind, wobei die Winkel ($\alpha$, $\beta$) zwischen je zwei Kraftanlageflächen abwechselnd größer und kleiner als 180° sind, so daß die Verbindungspunkte zwischen je zwei Kraftanlageflächen auf zwei konzentrischen Kreisen (20, 24) liegen und die Ecken eines regelmäßigen Vielecks bilden.

FIG.1

EP 0 087 721 A1

**0087721**

Anmelder :     Dr. Manfred Rappold
               Am Ziegelrain 6
               7117 Bretzfeld


## Kopf- und Schlüsselausbildung für eine Schraube


Die Erfindung betrifft eine Werkzeug- und Befestigungselementausbildung zur Übertragung von Drehmomenten, insbesondere eine
Kopf- und/oder Schlüsselausbildung einer Schraube oder dergleichen und eines Schlüssels oder Drehers, bei der mindestens drei in Aufsicht kreisbogenförmige, nach außen gewölbte, sich unter Bildung von Kanten treffende Kraftangriffsflächen vorhanden sind, deren Krümmungsmittelpunkte
auf einem und deren Verbindungspunkte auf mindestens einem
zur Schraubenachse konzentrischen Kreis liegen.

Es ist bereits ein Schraubenkopf bekannt (DE-OS 29 46 781),
bei dem drei in Aufsicht kreisbogenförmige Kraftanlageflächen die drei Eckpunkte eines gleichseitigen Dreiecks
verbinden. Dabei können die Kraftangriffsflächen sowohl die äußere Begrenzung des Schraubenkopfes als auch die Begrenzung einer in den Schraubenkopf eingelassenen Ausnehmung bilden. Zum Verdrehen einer Schraube mit einem derartigen Schraubenkopf dient ein entsprechend komplementär ausgebildetes Werkzeug. Bei dieser Art der Drehmomentübertragung erfolgt zwar schon eine flächenförmige Anlage zwischen dem Werkzeug und der Schraube, jedoch ist die eigentliche Anlagefläche wesentlich kleiner als die Kraftanlagefläche.

Weiterhin ist eine Kopfausbildung für eine Schraube bekannt, bei der im Schraubenkopf eine Ausnehmung mit abwechselnd konkaven und konvexen, glatt tangential ineinander übergehenden Zylinderflächen vorhanden ist. Dabei besitzen die konvexen Zylinderflächen einen mindestens doppelt so großen Krümmungsradius wie die konkaven Zylinderflächen. Die Ausnehmung besitzt dabei etwa die Querschnittsform eines sechsstrahligen Sternes mit abgerundeten Spitzen. Aufgrund der relativ schmalen nach außen gerichteten Rippen wird an diesen Stellen das entsprechende Werkzeug stark beansprucht, so daß sich die Passung ständig verschlechtert und die Gefahr von Beschädigungen des Werkzeugs gegeben ist.

Der Erfindung liegt die Aufgabe zugrunde, eine Ausbildung eines Schraubenkopfes und des zugehörigen Schlüssels zu schaffen, bei dem sich sowohl die Schraubenköpfe als auch die Werkzeuge einfach und kostengünstig herstellen lassen, mit dem sich große Drehmomente übertragen lassen und bei dem gleichzeitig die Gefahr einer Beschädigung oder Abnutzung von Werkzeug und Schraube möglichst geringgehalten wird.

Zur Lösung dieser Aufgabe schlägt die Erfindung eine Ausbildung vor, bei der die Innenwinkel zwischen je zwei benachbarten Kraftangriffsflächen abwechselnd kleiner und
größer als 180° sind, derart, daß die Verbindungspunkte
zwischen diesen abwechselnd auf einem Außen- und einem
Innenkreis liegen. Dadurch ergeben sich für die Querschnittsform des Schraubenkopfes oder einer zentrischen
Ausnehmung im Schraubenkopf die Figur eines Sternes, wobei jedoch alle Linien des Sternes nach außen gebogen
sind. Die von der Erfindung vorgeschlagenen Maßnahmen
vergrößern den Anteil der Flächen, an denen tatsächlich
eine Anlage des Werkzeuges an der Schraube vorliegt.

In Weiterbildung kann vorgesehen sein, daß die auf dem
Außen- und die auf dem Innenkreis liegenden Verbindungspunkte der Kraftanlageflächen jeweils ein gegenüber dem
jeweils anderen  winkelversetzt angeordnetes regelmäßiges
n-Eck bilden. Dabei beträgt die Anzahl der Ecken mindestens
drei, besonders günstig ist es jedoch, wenn es sich um
geradzahlige Eckenzahl handelt. Als besonders günstige
Beispiele schlägt die Erfindung Ausbildungen mit vier,
sechs, acht und zwölf Ecken vor.

Nach einem weiteren Merkmal kann vorgesehen sein, daß
die durch die Kraftangriffsflächen gebildete Figur zu
jeder durch einen Verbindungspunkt gehenden Mittelpunktlinie symmetrisch ist. Aufgrund dieser Symmetrie läßt
sich das zugehörige Werkzeug in möglichst vielen Winkelstellungen einsetzen, was bei an unzugänglichen Stellen eingesetzten Schrauben das Arbeiten wesentlich erleichtert.

Um sowohl eine gute Möglichkeit der Übetragung des Drehmomentes, d.h. eine möglichst große, flächige Anlage,
zu erhalten, als auch die Gefahr eines Überdrehens möglichst geringzuhalten,   schlägt die Erfindung vor, daß das Verhältnis zwischen dem Radius des Außenkreises und
dem Radius des Innenkreises zwischen etwa 1,85 und 1,1,
vorzugsweise zwischen etwa 1,25 und 1,1, liegt.

Da auch bei festgelegter Eckenzahl und festgelegtem Verhältnis von Außenkreis zu Innenkreis die geometrische
Form der Kreisbögen noch nicht festgelegt ist, schlägt
die Erfindung weiterhin als besonders günstig vor, daß
das Verhältnis zwischen dem Radius des Außenkreises und
dem Krümmungsradius der Kraftanlageflächen zwischen etwa
0,6 und etwa 1, vorzugsweise jedoch zwischen etwa 0,73
und etwa 1, liegt.

Als besonders günstig hat es sich herausgestellt, wenn,
wie von der Erfindung vorgeschlagen, der Winkel zwischen
der Tangente an dem Außenkreis und der Tangente an die
Kraftanlageflächen im Verbindungspunkt zwischen etwa 40°
und etwa 15°, vorzugsweise zwischen etwa 30° und etwa 20°
liegt.

Um die Herstellung der Werkzeuge und der Schrauben weiter
zu vereinfachen, schlägt die Erfindung vor, daß zu jeder
Kraftanlagefläche eine zweite existiert, die auf dem
gleichen Kreisbogen liegt. Dabei kann zwischen diesen
beiden Kraftanlageflächen jeweils noch eine nach außen
gerichtete Kante liegen, es ist jedoch auch möglich, daß
mehr als eine Kante zwischen den Flächen des gleichen
Kreisbogens liegt. Von diesen beiden auf dem gleichen Kreisbogen liegenden Kraftanlageflächen dient jeweils die eine zur
Kraftübertragung beim Rechtsdrehen und die jeweils andere
zur Kraftübertragung beim Linksdrehen.

Die Kraftanlageflächen können die Begrenzung einer in
einen Schraubenkopf eingebrachten zentrischen Ausnehmung und die Begrenzung eines Ansatzes eines entsprechenden Werkzeugs sein. Dies ist insbesondere bei sog. Senkkopfschrauben
von Vorteil.

Bei dieser Art der Ausbildung kann, insbesondere dann, wenn
es sich um eine geradzahlige Anzahl von Ecken handelt, notfalls auch ein normaler Schraubenzieher verwendet werden,
um die Schraube zu betätigen. Diese Ausnehmung kann jedoch
noch dem weiteren Zweck dienen, daß sie den Schaft oder den
Ansatz einer Abdeckkappe aufnimmt. Insbesondere bei Senkkopfschrauben, jedoch auch bei anderen Schrauben, wird es
häufig gewünscht, die Oberseite der Schraube in eingebautem Zustand mit einer Abdeckkappe abzudecken. Hierzu mußten bei bekannten Schrauben diese noch jeweils ein zentrales Loch aufweisen. Bei der von der Erfindung vorgeschlagenen Ausbildung kann jedoch die Ausnehmung selbst zum Aufnehmen des Schaftes dienen.

Um die Möglichkeit der Bedienung mit Hilfe eines normalen
Schraubenziehers zu verbessern, kann erfindungsgemäß auch
vorgesehen sein, daß der Schraubenkopf einen üblichen Querschnitt aufweist.

Um, insbesondere bei flachen Schraubenköpfen, eine gute
Führung des Schraubenziehers zu gewährleisten und dadurch
ein Verkanten zu verhindern, schlägt die Erfindung weiterhin vor, daß die zentrische Aufnehmung an ihrem Boden ein
zentrisches Zentrierloch aufweist. Dieses besitzt beispielsweise einen wesentlich kleineren Durchmesser als die Ausnehmung selbst, so daß es sich bis in den Bereich des Schaftes der Schraube hin erstrecken kann.

Es ist ebenfalls möglich, insbesondere wenn Material gespart
werden soll, daß ein relativ flacher Schraubenkopf einen zentrischen Ansatz nach Art einer Erhebung aufweist, dessen äußere Begrenzungsflächen als. Kraftanlagefläche nach der Erfindung ausgebildet sind.

Es ist jedoch ebenfalls möglich, daß die Kraftanlageflächen die äußere Begrenzung eines Schraubenkopfes und einer Ausnehmung eines Werkzeugs sind. Dabei ist es natürlich auch möglich, daß sowohl die äußeren Flächen des Schraubenkopfes als auch die Begrenzungsflächen einer in den Schraubenkopf eingebrachten Ausnehmung als Kraftanlageflächen nach der Erfindung ausgebildet sind. Eine derartige Schraube läßt sich dann auf zwei Methoden, d.h. sowohl mit einem Schraubenschlüssel als auch mit einem Schraubendreher, bewegen. Ebenfalls ist es denkbar, ein Doppelwerkzeug zu schaffen. Es kann für spezielle Schraubenköpfe auch möglich sein, die äußere Begrenzung mit einer anderen Anzahl von Kraftanlageflächen oder einem anderen Radienverhältnis auszubilden, oder aber eine Versetzung der äußeren und inneren Kraftanlageflächen um einen bestimmten, von Fall zu Fall variierenden Winkel vorzunehmen.

Weitere Merkmale, Einzelheiten und Vorzüge ergeben sich aus den Ansprüchen, der folgenden Beschreibung bevorzugter Ausführungsformen sowie anhand der Zeichnung. Hierbei zeigen:

Fig. 1 bis 6    mehrere Ausführungsformen mit unterschiedlicher Kraftanlageflächenzahl;

Fig. 7 bis 10    Ausführungsformen mit acht Kraftanlageflächem und unterschiedlichem Durchmesser des Innenkreises;

Fig. 11 bis 14    Ausführungsformen mit zwölf Kraftanlageflächem und unterschiedlichem Durchmesser des Innenkreises;

Fig. 15 und 16    Ausführungsformen mit sechzehn Anlageflächen;

Fig. 17 und 18    Ausführungsformen mit vierundzwanzig
                  Kraftanlageflächen.

Fig. 19           einen Schnitt durch einen Schraubenkopf.

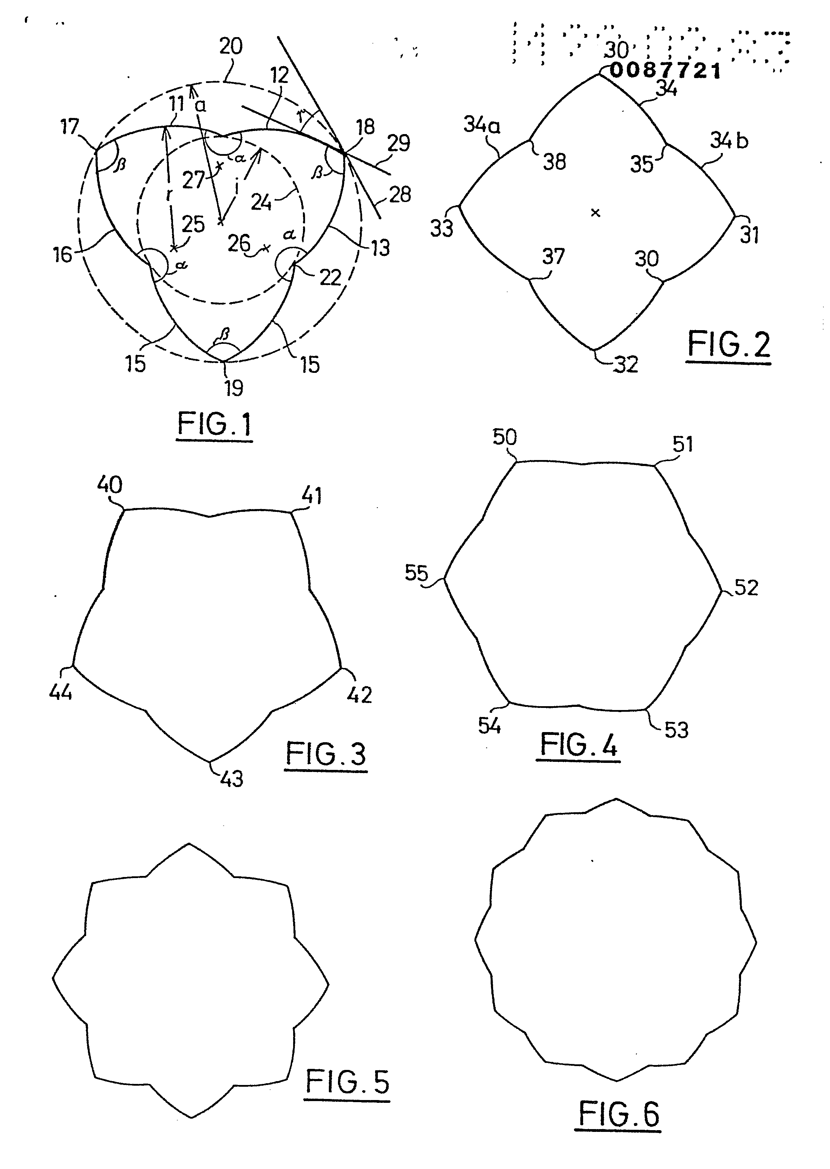

Figur 1 zeigt die Aufsicht auf die Kraftanlageflächen 11
bis 16 des Kopfes einer Schraube. Dabei kann beispielsweise der Innenraum der durch die Anlageflächen 11 bis 16
gebildeten Figur eine zentrische Ausnehmung in einem Schraubenkopf sein. In diesem Fall verläuft die Längsachse der
Schraube senkrecht zur Papierebene, wobei der Querschnitt
der Ausnehmung zu der Oberseite des Schraubenkopfes hin
leicht divergiert. Dies ist aus Herstellungsgründen der
Schraube erforderlich.

Wie aus Figur 1 hervorgeht, verlaufen alle Kraftanlageflächen 11 bis 16 nach außen gebogen. Die Verbindungspunkte 17, 18 und 19 zwischen den Kraftanlageflächen 16
und 11, 12 und 13, 14 und 15 liegen auf einem Kreis 20,
wobei die Punkte 17 bis 19 voneinander den gleichen Abstand aufweisen. Sie bilden daher die Eckpunkte eines
gleichseitigen Dreiecks. Die Verbindungspunkte 21, 22
und 23 zwischen den Kraftanlageflächen 11 und 12, 13
und 14, 15 und 16 liegen ebenfalls auf einem Kreis 24,
der zum Kreis 20 konzentrisch angeordnet ist. Jede der
Kraftanlageflächen 11 bis 16 besitzt in der in Figur 1
dargestellten Aufsicht die Form eines Kreisbogens mit
identischem Radius, wobei die Flächen 11 und 14  den
gleichen Mittelpunkt 25, die Flächen 12 und 15 den gleichen Mittelpunkt 26 und die Flächen 13 und 16 den gleichen Mittelpunkt 27 aufweisen. Wie nicht im einzelnen dargestellt, jedoch leicht zu sehen ist, liegen die Mittelpunkte
25 bis 27 ebenfalls auf einem konzentrischen Kreis.

Die Innenwinkel $\alpha$ zwischen den Anlageflächen 11 und 12,
13 und 14, 15 und 16 sind jeweils größer als 180°, während die restlichen Innenwinkel $\beta$ kleiner als 180° sind.
Von einem beliebigen Punkt im Uhrzeigersinn ausgehend,
wechseln die Winkel $\alpha$ und $\beta$ ständig miteinander ab.

Wie ebenfalls aus Figur 1 hervorgeht, beträgt der Winkel $\gamma$
zwischen einer Tangente 28 an den Außenkreis 20 und einer
Tangente 29 an die Anlagefläche 12 im Punkt 18 etwa 35°.
Das Verhältnis von Radius a des Außenkreises 20 zum Radius i
des Innenkreises 24 beträgt etwa 1,65.

Bei der Ausführungsform nach Figur 2, die wieder eine Aufsicht auf eine zentrische Ausnehmung eines Schraubenkopfes
oder den Umriß eines Schraubenkopfes darstellt, liegen die
äußeren Verbindungspunkte 30 bis 33 zwischen den insgesamt
acht     Anlageflächen  34 auf den Eckpunkten eines Quadrates, während die inneren Verbindungspunkte 35 bis 38
auf den Eckpunkten eines kleineren, um 45° winkelversetzt
angeordneten Quadrates liegt. Wiederum liegt die Anlagefläche 34a auf dem gleichen Kreisbogen wie die Anlagefläche
34b, was aufgrund der Symmetrie auch für jeweils zwei andere Kraftanlageflächen gilt.

Es ist ebenfalls zu sehen, daß die in Figur 2 dargestellte
Figur zu jeder durch den Mittelpunkt und einen Verbindungspunkt 30 bis 33 und 35 bis 38 hindurchgehende Linie symmetrisch ist. Das gleiche gilt für die Ausführungsform nach
Figur 1.

Figur 3 zeigt eine Ausführungsform, bei der die Verbindungspunkte 40 bis 44 die Ecken eines regelmäßigen Fünfeckes bilden. Bei der Ausführungsform nach Figur 4 liegen die Verbindungspunkte 50 bis 55 auf den Ecken eines regelmäßigen Sechseckes, während die Ausführungsformen nach Figur 5 und Figur 6
von einem Achteck bzw. einem Zwölfeck ausgehen.

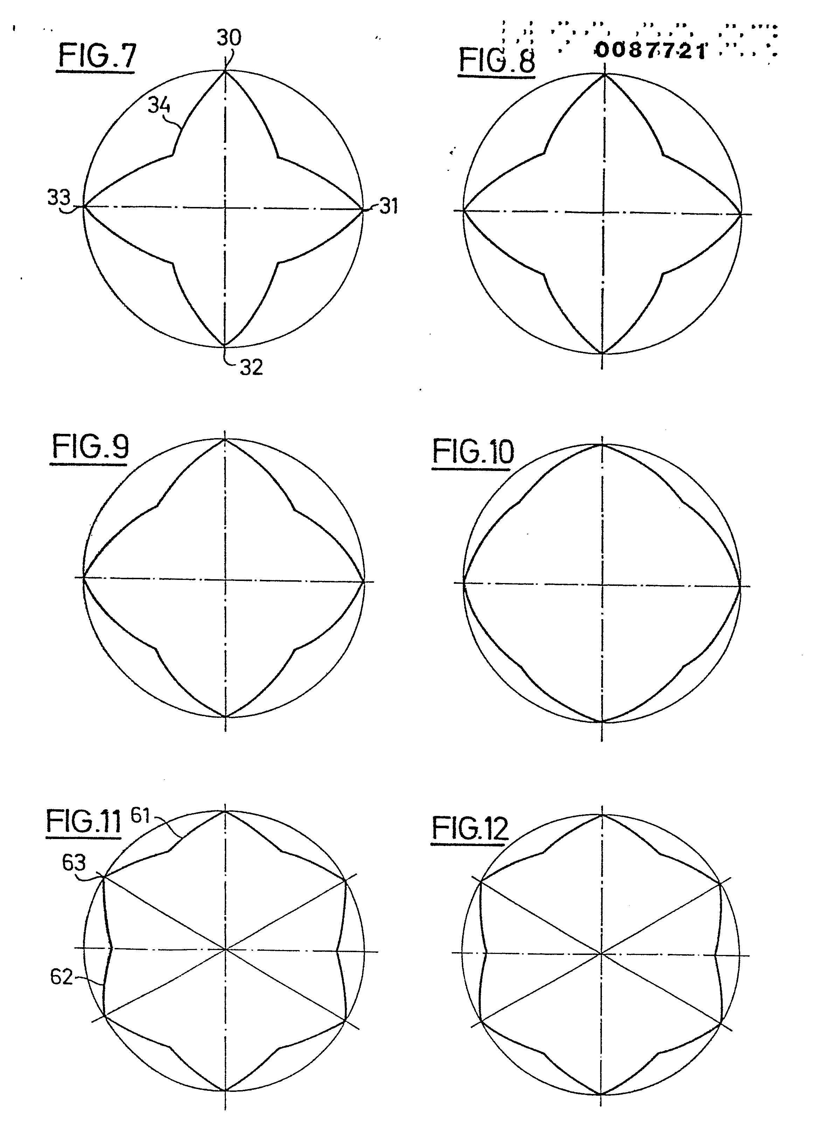

Bei den in den Figuren 7 bis 10 dargestellten Ausführungsformen, bei denen die äußeren Verbindungspunkte 30 bis 33
auf den Ecken eines Quadrates liegen, unterscheiden sich
jeweils das Verhältnis zwischen dem Radius des Außenkreises
und dem Krümmungsradius der Kraftanlageflächen 34 sowie das
Verhältnis zwischen dem Radius des Außenkreises und dem
Radius des Innenkreises. Das Verhältnis zwischen dem Radius
des Außen- und des Innenkreises beträgt bei den Ausführungsformen nach Figur 7 bis 10  1,83, 1,65, 1,43 und 1,18.
Das Verhältnis von Radius des Außenkreises zu Krümmungsradius beträgt, von Figur 7 bis Figur 10,  0,75, 0,8, 0,89
und 0,97.

Bei den Ausführungsformen nach Figur 11 bis 14 beträgt das
Radienverhältnis von Außen- und Innenkreis 1,27, 1,22, 1,14
und 1,08. Das Verhältnis zwischen Radius des Außenkreises
und Krümmungsradius der Kraftanlageflächen beträgt 0,61,
0,66, 0,75 und 0,87. Es liegt in diesem Fall also zwischen
etwa 0,6 und 0,9. während es bei der vorhergehenden Ausführungsform zwischen etwa 0,75 und etwa 1 lag.

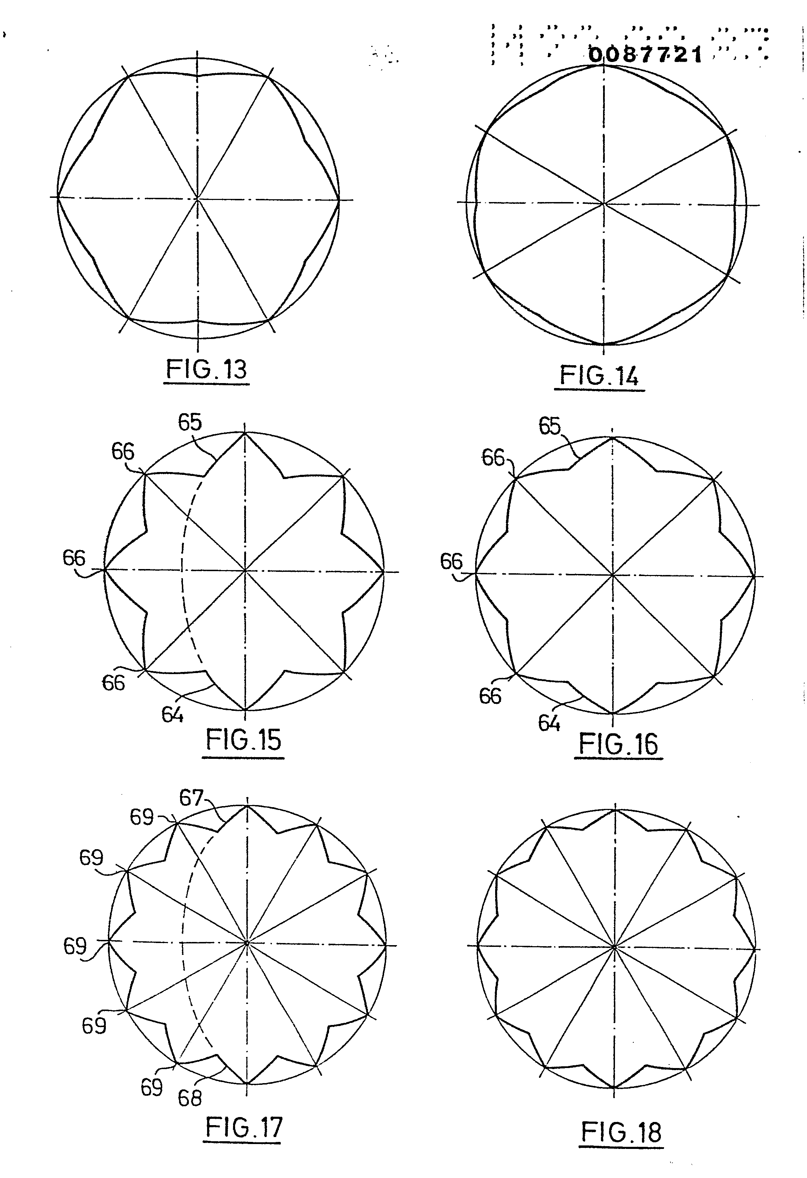

Bei den Ausführungsformen nach Figur 15 und 16 liegt das
Radiusverhältnis von Außen- zu Innenkreis bei 1,38 bzw.
1,22, während das Radienverhältnis von Außenkreis zu
Kraftanlagefläche bei 0,79 bzw. 0,89 liegt.

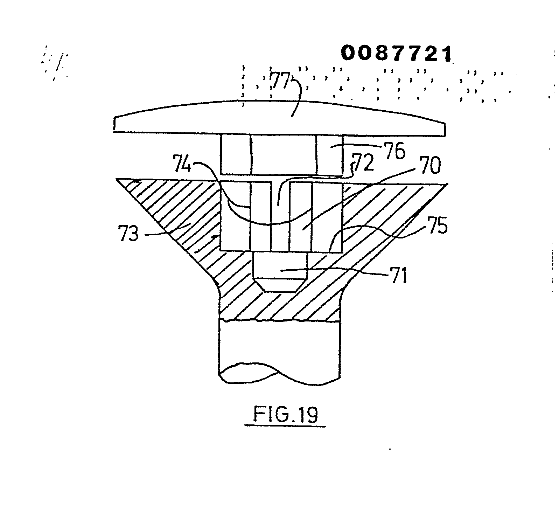

Bei den Ausführungsformen nach Figur 17 und 18 liegt das
Verhältnis von Außen- zu Innenkreis bei 1,22 bzw. 1,14,
das zweite Verhältnis liegt bei 0,79 bzw. 0,89.

Bei den Ausführungsformen nach Figur 11 bis 14 liegt jeweis zwischen der Kraftanlagefläche 61 und 62, die beide
auf dem gleichen Kreisbogen liegen, eine Außenkante 63,
während bei den Ausführungsformen nach Figur 15 und 16
zwischen den auf einem Kreisbogen liegenden Kraftanlageflächen 64 und 65 insgesamt drei Außenkanten 66 liegen.

Bei der Ausführungsform nach Figur 17 und 18 liegen zwischen den auf einem Kreisbogen liegenden Kraftanlageflächen 67 und 68 insgesamt fünf Außenkanten 69.

Fig. 19 zeigt einen abgebrochenen Schnitt durch einen
Schraubenkopf 73. Dieser besitzt eine zentrische Ausnehmung
70, die von oben gesehen beispielsweise die in Fig. 4
dargestellte Form besitzen kann. Aus der Figur sind zwei
Kanten 74 erkennbar, die beispielsweise den Verbindungspunkten 50 und 51 in Fig. 4 entsprechen. Am Boden 75
der Ausnehmung 70 ist ein zentrisches Zentrierloch 71
angebracht, das zur Führung eines entsprechenden Zapfens
an einem Schraubendreher o.dgl. dient.

Der Schraubenkopf 73 nach Fig. 19 besitzt ebenfalls einen
Querschlitz 72  der senkrecht zur Papierebene verläuft
und den Schraubenkopf 73 ganz durchschneidet. Dabei
schneidet er ebenfalls die Längsachse der Schraube.
Aufgrund des Querschlitzes 72 kann der Schraubenkopf
73 mit Hilfe eines normalen Schraubenziehers betätigt
werden.

In die Ausnehmung 70 läßt sich der schaftartige Ansatz
76 einer nur schematisch in Seitenansicht dargestellten
Abdeckkappe 77 einsetzen. Natürlich wäre es auch möglich, daß der Ansatz 76 der Abdeckkappe 77 an seiner
Unterseite einen weiteren, dem Zentrierloch 71 entsprechenden Ansatz aufweisen könnte. In dem hier
schematisch dargestellten Fall läßt sich die Abdeckkappe jedoch unverändert auch bei Schraubenköpfen
ohne Zentrierloch 71 verwenden.

Anmelder:     Dr. Manfred Rappold
              Am Ziegelrain 6
              7117 Bretzfeld


Kopf- und Schlüsselausbildung für eine Schraube


A n s p r ü c h e

----------------

1.  Werkzeug- und Befestigungselementausbildung zur Obertra-
    gung von Drehmomenten, insbesondere Kopf- und/oder
    Schlüsselausbildung einer Schraube oder dergleichen
    und eines Schlüssels, Drehers oder dergleichen, bei der
    mindestens drei in Aufsicht kreisbogenförmige, nach außen
    gewölbte, sich unter Bildung von Kanten treffende Kraftangriffsflächen (11 bis 16) vorhanden sind, deren Krümmungsmittelpunkte (25 bis 27) auf einem und deren Verbindungspunkte (17 bis 19, 21 bis 23) auf mindestens
    einem zur Schraubenachse konzentrischen Kreis (20, 24)
    liegen, d a d u r c h  g e k e n n z e i c h n e t ,
    daß die Innenwinkel ($\alpha$, $\beta$) zwischen je zwei benachbar-
    ten Kraftangriffsflächen (11 bis 16) abwechselnd kleiner
    ($\beta$) und größer ($\alpha$) als 180° sind, derart, daß die Verbindungspunkte (17 bis 19, 21 bis 23) zwischen diesen
abwechselnd auf einem Außen- (20) und einem Innenkreis
(24) liegen.

2. Ausbildung nach Anspruch 1, dadurch gekennzeichnet, daß
   die auf dem Außen- (20) und die auf dem Innenkreis (24)
   liegenden Verbindungspunkte (17 bis 19, 21 bis 23) jeweils ein gegenüber dem jeweils anderen winkelversetzt
   angeordnetes regelmäßiges Vieleck bilden.

3. Ausbildung nach Anspruch 2, dadurch gekennzeichnet, daß
   das Vieleck eine gerade Anzahl von Ecken besitzt.

4. Ausbildung nach einem der vorhergehenden Ansprüche,
   dadurch gekennzeichnet, daß die durch die Kraftangriffsflächen (11 bis 16) gebildete Figur zu jeder
   durch einen Verbindungspunkt (17 bis 19, 21 bis 23)
   gehenden Mittelpunktlinie symmetrisch ist.

5. Ausbildung nach einem der vorhergehenden Ansprüche,
   dadurch gekennzeichnet, daß das Verhältnis zwischen
   dem Radius (a) des Außenkreises (20) und dem Radius
   (i) des Innenkreises (24) zwischen etwa 1,85 und etwa
   1,1, vorzugsweise zwischen etwa 1,25 und etwa 1,1,
   liegt.

6. Ausbildung nach einem der vorhergehenden Ansprüche,
   dadurch gekennzeichnet, daß das Verhältnis zwischen
   dem Radius (a) des Außenkreises (20) und dem Krümmungsradius (r) der Kraftanlageflächen (11 bis 16, ... )
   zwischen etwa 0,6 und etwa 1, vorzugsweise zwischen
   etwa 0,73 und etwa 0,9 liegt.

7. Ausbildung nach einem der vorhergehenden Ansprüche,
   dadurch gekennzeichnet, daß der Winkel ($\gamma$) zwischen

der Tangente (28) an dem Außenkreis (20) und der
Tangente (29) an die Kraftanlageflächen (12) im
Verbindungspunkt (18) zwischen etwa 40° und etwa
15°, vorzugsweise zwischen etwa 30° und etwa 20°,
liegt.

8. Ausbildung nach einem der vorhergehenden Ansprüche,
   dadurch gekennzeichnet, daß zu jeder Kraftanlagefläche (61, 64, 67) eine zweite (63, 65, 68) existiert, die auf dem gleichem Kreisbogen liegt
   (Fig. 11, 15, 16, 17).

9. Ausbildung nach einem der vorhergehenden Ansprüche,
   dadurch gekennzeichnet, daß die Kraftanlageflächen
   (11 bis 16,...) die Begrenzung einer in einem Schraubenkopf eingebrachten zentrischen Ausnehmung und eines
   Ansatzes eines entsprechenden Werkzeugs sind.

10. Ausbildung nach einem der vorhergehenden Ansprüche,
    dadurch gekennzeichnet, daß die Kraftanlageflächen
    (11 bis 16) die äußere Begrenzung eines Schraubenkopfes und einer Ausnehmung eines Werkzeugs sind.

11. Ausbildung nach Anspruch 10, dadurch gekennzeichnet,
    daß die äußere Begrenzung des Schraubenkopfes eine
    der Form der Ausnehmung ähnliche Form aufweist.

12. Ausbildung nach Anspruch 10 oder 11, dadurch gekennzeichnet, daß die äußere Form um einen Winkel gegenüber der inneren versetzt ist.

13. Ausbildung nach einem der vorhergehenden Ansprüche, dadurch gekennzeichnet, daß die Kraftanlageflächen (11 bis 16, ...) die äußere Begrenzung eines zentrischen Vorsprungs des Schraubenkopfes sind.

14. Ausbildung nach einem der Ansprüche 9 bis 13, dadurch gekennzeichnet, daß die Ausnehmung (70) an ihrem Boden ein zentrisches Zentrierloch (71) aufweist.

15. Ausbildung nach einem der vorhergehenden Ansprüche, dadurch gekennzeichnet, daß der Schraubenkopf einen die Schraubenlängsachse schneidenden Querschlitz (72) aufweist.

16. Ausbildung nach einem der Ansprüche 9 bis 15, dadurch gekennzeichnet, daß in die Ausnehmung (70) des Schraubenkopfs eine Abdeckkappe mit einem an ihrer Unterseite angeordneten Ansatz einsetzbar ist.

--------------

FIG.1

FIG.2

FIG.3

FIG.4

FIG.5

FIG.6

0087721

FIG.7

FIG.8

FIG.9

FIG.10

FIG.11

FIG.12

FIG.13

FIG.14

FIG.15

FIG.16

FIG.17

FIG.18

FIG.19

Europäisches
Patentamt

**EUROPÄISCHER RECHERCHENBERICHT**

**0087721**
Nummer der Anmeldung

EP 83 10 1667

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | FR-A-1 339 685 (BOULEY) <br> * Figuren 4-8 * | 1-6 | F 16 B 23/00 |
| X | CH-A- 328 177 (VERTRIEB- UND VERKAUF-AKTIENGESELLSCHAFT) <br> * Figur 4 * | 1-6 | |
| A | DE-A-2 443 719 (BORUTON KOGYO) <br><br> * Figuren 11, 12 * | | |
| A | US-A-2 248 695 (BRADSHAW) <br><br> * Figur 5 * | | |
| A | US-A-4 171 662 (SIMONE et al.) <br><br> * Figur 16 * | | RECHERCHIERTE SACHGEBIETE (Int. Cl. ³) <br><br> F 16 B 23/00 |

Der vorliegende Recherchenbericht wurde für alle Patentansprüche erstellt

| Recherchenort <br> BERLIN | Abschlußdatum der Recherche <br> 13-05-1983 | Prüfer <br> ZAPP E |
|---|---|---|